Europäisches Patentamt

European Patent Office

Office européen des brevets

(19)

(11) Publication number: 0 153 157
A2

# EUROPEAN PATENT APPLICATION

(12)

(21) Application number: 85300984.3

(22) Date of filing: 14.02.85

(51) Int. Cl.⁴: B 01 D 53/36, F 01 N 3/28

(30) Priority: 14.02.84 JP 19478/84 U

(43) Date of publication of application: 28.08.85
Bulletin 85/35

(84) Designated Contracting States: CH DE FR GB LI SE

(71) Applicant: HONDA GIKEN KOGYO KABUSHIKI KAISHA,
27-8, Jingumae, 6-chome, Shibuya-ku, Tokyo 150 (JP)

(72) Inventor: Goryozono, Youichi, 1-3-31, Niikura, Wako-Shi
Saitama (JP)
Inventor: Hishida, Hiroaki, 2-15-5, Higashimizuhodai,
Fujimi-shi Saitama (JP)
Inventor: Arai, Sakuji, Ageo-House 5-204 2-82-2,
Nishimiyashita, Ageo-shi Saitama (JP)

(74) Representative: Leale, Robin George et al, FRANK B.
DEHN & CO. Imperial House 15-19 Kingsway, London
WC2B 6UZ (GB)

(54) Catalytic converter.

(57) A catalytic converter for an internal combustion engine,
wherein first and second filters $S_1$ and $S_2$ and a catalyst carrier
$C_a$ are mounted in a casing C in series, the first filter being
adapted to remove solid catalyst-poisoning substances, the
second filter adapted to remove gaseous catalyst-poisoning
substances, and the thus filtered exhaust gas then being cata-
lytically converted by the catalyst carrier which has an ex-
tended useful life by reason of the removal of catalyst-poison-
ing substances by the first and second filters. The filters are ho-
neycomb type monolithic ceramic units.

FM 146-601

"CATALYTIC CONVERTER"

This invention relates to a catalytic converter for use in the exhaust system of a vehicle engine.

In general, a catalytic converter includes a catalyst carrier in a catalytic casing by means of which noxious components, such as hydrocarbons (HC), carbon monoxide (CO) and nitrous oxides ($NO_x$), contained in the exhaust gas flowing into the catalytic casing may be oxidized or reduced by that catalyst carrier to thereby clean the exhaust gas. If the fuel used contains lead, however, the solid or gaseous lead compounds in the exhaust gas act as a poison to the catalyst. Furthermore, any phosphor, zinc or calcium contained in an engine lubricant may become mixed into the exhaust gas to act as a poison to the catalyst, thereby reducing the useful life of the catalyst carrier.

As is disclosed in US Patent No. 3,227,659, for example, there has been proposed a catalytic converter in which a substrate prepared by coating a cermaics carrier with alumina containing phosphor is arranged upstream of an exhaust gas cleaning catalyst in order to filter off catalyst-poisoning substances from the exhaust gas before it reaches the catalyst. Despite this useful filtering, the said substrate soon becomes clogged with solid catalyst-poisoning substances whereby it not only fails to perform its intended function but also increases the resistance to the exhaust flow, thereby adversely affecting the operation of the engine.

According to the present invention there is provided a catalytic converter having a casing with an inlet and an outlet for exhaust gas, a first filter mounted in said casing for receiving exhaust gas from said inlet and having means for removing at least a substantial portion of any catalyst-contaminating solid particles in the exhaust gas, a second filter mounted in said casing for receiving the exhaust gas after it has passed through said first filter and having means for removing a substantial portion of any catalyst-contaminating gases in the exhaust gas, and a catalyst carrier mounted in said casing between said second filter and said outlet for receiving the exhaust gas from said second filter and having means for catalytically converting noxious gases in the exhaust gas before the exhaust gas passes to said outlet.

An embodiment of the invention will now be described by way of example and with reference to the accompanying drawings, wherein:

Figure 1 is a longitudinal sectional view of a catalytic converter according to the invention;

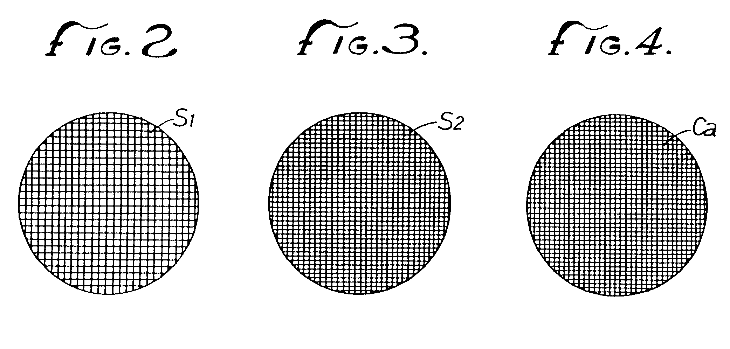

Figure 2 is a sectional end view taken substantially on the line II-II of Figure 1 and shows the first filter;

Figure 3 is a sectional end view taken substantially on the line III-III of Figure 1 and shows the second filter; and

Figure 4 is a sectional end view taken substantially on the line IV-IV of Figure 1 and shows the catalyst carrier.

The catalytic converter of the present embodiment comprises a first filter or substrate $S_1$, a second filter or substrate $S_2$, a catalyst carrier $C_a$, and a catalytic casing C accommodating and carrying these three components in series. The catalytic converter thus constructed is particularly adapted for use in the exhaust system of a vehicle engine.

The first substrate $S_1$ comprises a monolithic ceramic carrier unit in the form a circular-section or elliptical-section column having a honeycomb construction of about 200 meshes (i.e. 200 openings per square inch), whose purpose is to filter off mainly solid catalyst-poisoning substances, such as lead compounds, contained in the exhaust gas. Honeycomb type ceramic monolithic units of this general type are well known in the catalytic converter field, such as from U.S. Patents Nos. 4,238,456 and 4,353,872.

The second substrate $S_2$ comprises a monolithic ceramic carrier unit in the form of a circular-section or elliptical-section column having a honeycomb construction of 300 to 400 meshes and has is surfaces coated with alumina containing phosphor to filter off mainly gaseous catalyst-poisoning substances, such as lead compounds, contained in the exhaust gas.

The catalyst carrier $C_a$ also comprises a monolithic ceramic carrier in the form of a circular-section or elliptical-section column having a honeycomb construction of 300 to 400 meshes, i.e. a mesh substantially equal to that of the second substrate $S_2$, and its principal purpose is to oxidize or reduce and filter off noxious components, such as HC, CO and $NO_x$, in the exhaust gas.

The catalyst casing C is constructed by welding and jointing flanges 8 and 9 of a pair of upper and lower casing halves Ch of heat resistant metal, such as stainless steel, along the longitudinal axis L - L to form a unitary structure. A tapered front connecting tube 2 is formed to extend integrally from the front end of a cylindrical trunk 1 of the casing C, and a tapered rear connecting tube 4 is fixed to the rear end of the same. To the front and rear end faces of the front and rear connecting tubes 2 and 4, there are integrally jointed front and rear mounting flanges 3 and 5, respectively, in each of which are anchored a plurality of mounting bolts 6 and 7.

The trunk 1 of the catalytic casing C is formed near to its front or upstream end with a first annular groove 10 which extends around the circumference of the trunk to form two retaining shoulders 11 and 12 in the inner circumferential surface of the trunk. These retaining shoulders 11 and 12 provide means for retaining the rear end of the first substrate $S_1$ and the front end of the second substrate $S_2$, as will be described hereinafter.

The trunk 1 of the catalytic casing 1 is furthermore formed at an intermediate location in its length with a second annular groove 13 which extends around the circumference of the trunk to form two more retaining shoulders 14 and 15 in the inner circumferential surface of the trunk. These retaining shoulders 14 and 15 provide means for retaining the rear end of the second substrate $S_2$ and the front end of the catalyst carrier $C_a$, as will be described hereinafter.

Near to the front or upstream end of the catalytic casing C, a resilient holding member 16 supports the circumference of the aforementioned first substrate $S_1$, whose front and rear ends are retained via cushion rings 18 and 19 by a front wall 17 and the retaining shoulder 11 of the trunk 1, so that the first substrate $S_1$ is securely mounted to move neither radially nor axially. The resilient holding member 16 may comprise a woven stainless steel sleeve, and cushion rings 18 and 19 may be formed of fine stainless steel wire woven or knitted into a ring, all as well known in the art.

In the trunk 1 of the catalytic casing C, downstream of the first substrate $S_1$, there is supported by another resilient holding member 20 the aforementioned second substrate $S_2$, with its front and rear ends retained via cushion rings 21 and 22 by the aforementioned retaining shoulders 12 and 14, so that the second substrate $S_2$ is also securely mounted to move neither radially nor axially.

0153157

- 5 -

Also in the trunk 1 of the catalytic casing C, downstream of the second substrate $S_2$, there is supported by another resilient holding member 23 the aforementioned catalyst carrier $C_a$, with its front and rear ends retained via cushion rings 25 and 26 by the aforementioned retaining shoulder 15 and a rear wall 24 of the trunk 1, so that the catalyst carrier $C_a$ is also securely mounted to move neither radially nor axially. Between the outer circumference of the rear portion of the catalyst carrier $C_a$ and the inner circumference of the rear portion of the trunk 1, an annular elastic seal member 27 is provided which is made of asbestos or "Interam" (which is the trade name of a product of the 3M Company) to seal the annular clearance between the trunk 1 and the catalyst carrier $C_a$.

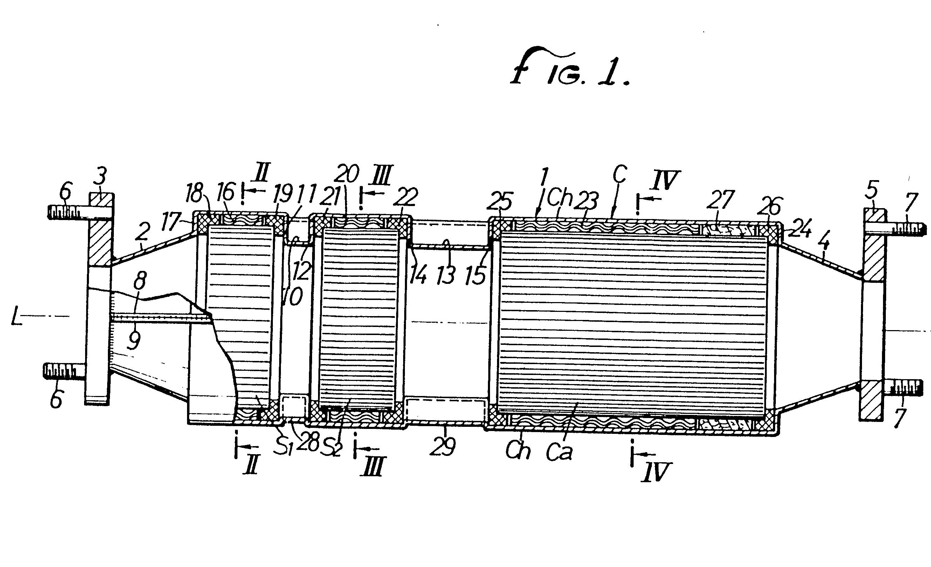

Reference numerals 28 and 29 in Figure 1 indicate reinforcing ribs spanning the aforementioned first and second annular grooves 10 and 13, for reinforcing the same.

The manner of operation of the illustrated embodiment of the invention will now be explained. The catalytic converter having the construction so far described has its front mounting flange 3 connected to the portion of the exhaust pipe leading to the engine and its rear mounting flange 5 connected to the portion of the exhaust pipe leading to the exhaust silencer. Exhaust gas containing noxious substances discharged from the engine first flows into the first substrate $S_1$ wherein mainly solid catalyst-poisoning substances such as lead compounds, phosphor, zinc, calcium and the like are filtered off. Then the exhaust gas, having had its solid catalyst-poisoning substances filtered off, flows into the second substrate $S_2$, in which gaseous catalyst-poisoning substances such as gaseous lead compounds are filtered off as a result of reaction. Thus the second substrate $S_2$ is protected, as much as possible, from becoming clogged because it is only supplied with exhaust gas which has had its solid catalyst-poisoning substances filtered off by the first substrate $S_1$.

Thereafter, the exhaust gas with both its solid and gaseous catalyst-poisoning substances filtered off flows into the catalyst carrier $C_a$, in which the noxious contents of the exhaust gas such as CO, HC and $NO_x$ are oxidized or reduced and filtered off. The cleaned exhaust gas then flows to the atmosphere through the exhaust silencer.

The selection of the meshes of the first and second substrates and catalyst carrier is arbitrary. For example, the meshes of the first substrate need not always be smaller (or coarser) than those of the second substrate.

Thus in a preferred device according to the invention a first substrate for filtering off solid catalyst-poisoning substances, a second substrate for filtering off gaseous catalyst-poisoning substances, and a catalyst carrier for cleaning the exhaust gas, are all accommodated in and located consecutively with respect to the upstream end of, a catalystic casing, which is connected to the exhaust system, whereby solid and gaseous catalyst-poisoning substances, such as lead compounds, contained in the exhaust gas are filtered off upstream of the catalyst carrier by the actions of the first and second substrates. As a result, the catalyst carrier does not have its catalyzing action obstructed by the catalyst-poisoning substances and is thereby able to efficiently remove noxious components such as HC, CO and $NO_x$ from the exhaust gas, whilst retaining its cleaning function for a long time. Moreover, the second substrate does not become clogged with solid catalyst-poisoning substances, and can thus properly perform its intended function of filtering off the gaseous

0153157

- 7 -

catalyst-poisoning substances. Furthermore, the resistance to the flow of the exhaust gas is not increased over-all.

It is to be clearly understood that there are no particular features of the appended claims which are at present regarded as being essential to the performance of the present invention, and that any one or more of such features of combinations thereof may therefore be omitted from any of the claims if and when amended during the prosecution of this application or in the filing or prosecution of any divisional application based thereon.

0153157

- 8 -

CLAIMS

1. A catalytic converter having a casing with an inlet and an outlet for exhaust gas, a first filter mounted in said casing for receiving exhaust gas from said inlet and having means for removing at least a substantial portion of any catalyst-contaminating solid particles in the exhaust gas, a second filter mounted in said casing for receiving the exhaust gas after it has passed through said first filter and having means for removing a substantial portion of any catalyst-contaminating gases in the exhaust gas, and a catalyst carrier mounted in said casing between said second filter and said outlet for receiving the exhaust gas from said second filter and having means for catalytically converting noxious gases in the exhaust gas before the exhaust gas passes to said outlet.

2. A catalytic converter as claimed in claim 1, wherein the said first filter is a honeycomb type monolithic ceramic unit.

3. A catalytic converter as claimed in claim 1 or 2, wherein the said second filter is a honeycomb type monolithic ceramic unit.

4. A catalytic converter as claimed in any of claims 1 to 3, wherein the said first filter has larger openings therethrough than the said second filter.

0153157

FIG. 1.

FIG.2  FIG.3.  FIG.4.

S1  S2  Ca

0153157